# EUROPEAN PATENT SPECIFICATION

(11) **EP 3 708 390 B1**
(45) Date of publication and mention of the grant of the patent: **11.10.2023**
(21) Application number: 20161833.7
(22) Date of filing: 09.03.2020
(51) Int. Cl.: B60C 23/04

(54) **SYSTEM AND METHOD FOR ASSIGNING A PROTOCOL TO A SENSOR**
SYSTEM UND VERFAHREN ZUR ZUWEISUNG EINES PROTOKOLLS ZU EINEM SENSOR
SYSTÈME ET PROCÉDÉ POUR ATTRIBUER UN PROTOCOLE À UN CAPTEUR

(30) Priority: 11.03.2019 US 201916298019
(43) Date of publication of application: 16.09.2020
(73) Proprietor: Huf Baolong Electronics Bretten GmbH, 75015 Bretten (DE)
(72) Inventor: DAVENPORT, Anthony C, 75015 Bretten (DE)
(74) Representative: Haseltine Lake Kempner LLP

(56) References cited:
- WO-A1-2013/063061
- FR-A1- 3 055 448
- US-B2- 9 415 642

## Description

### FIELD

The present invention relates generally to a system and method for assigning one or more communication protocols to a sensor, and more particularly to a system and method for assigning a wireless communication protocol to a sensor for a tire monitoring system.

### BACKGROUND

This section provides background information related to the present invention and is not necessarily prior art.

Tire pressure monitoring (TPM) systems are used to monitor the pressure and other conditions (e.g., temperature, wear, etc.) of a tire. Known TPM systems include one or more TPM sensors associated with a tire of a vehicle and in communication with a receiver of the vehicle. In this regard, he TPM system can monitor various conditions at the tires by transmitting data from the TPM sensors to the receiver for use by a driver or other end user of the vehicle. For example, a TPM system can be used to monitor the pressure of, or temperature at, a tire through the use of the sensors associated with each tire.

Conventional TPM systems may be installed by the vehicle manufacturer (e.g., an OE TPM system) or installed by a user of the vehicle as an aftermarket addition (e.g., an aftermarket TPM system, such as a retro-fit kit) to the vehicle. Such conventional TPM systems communicate and function with specific TPM system protocols. For example, an OE TPM system may include TPM sensors that communicate with a vehicle receiver using a particular wireless communication protocol, while an aftermarket TPM system may include TPM sensors that communicate with the vehicle receiver using another particular wireless communication protocol.

FR3055448, WO2013063061 and US9415642 disclose examples of known TPM systems, wherein US9415642 provides a method for programming a tire pressure sensor according to the preamble of claim 1.

While known TPM systems may be acceptable for their intended purposes, a continuous need for improvement in the relevant art remains.

### SUMMARY

This section provides a general summary of the invention, and is not a comprehensive disclosure of its full scope or all of its features.

One aspect of the invention provides a system for programming a tire pressure sensor having a power source and a memory. The system includes data processing hardware and memory hardware in communication with the data processing hardware. The memory hardware stores instructions that when executed on the data processing hardware cause the data processing hardware to transmit at least one communication protocol to the tire pressure sensor. The memory hardware also stores instructions that when executed on the data processing hardware cause the data processing hardware to determine a status of at least one of the power source or the memory based on the at least one communication protocol.

Implementations of the invention may include one or more of the following optional features. In some implementations, the system includes a display in communication with the data processing hardware. The instructions, when executed on the data processing hardware, may cause the data processing hardware to transmit the status of the at least one of the power source or the memory to the display.

In some implementations, transmitting the at least one communication protocol to the tire pressure sensor includes transmitting first and second communication protocols to the tire pressure sensor. The first communication protocol may correspond to a first original equipment manufacturer and the second communication protocol may correspond to a second original equipment manufacturer. The first communication protocol may be different than the second communication protocol.

In some implementations, determining a status of at least one of the power source or the memory based on the at least one communication protocol includes determining a status of the power source and the memory.

In some implementations, determining the status of the power source and the memory includes determining an available capacity of the power source and an available capacity of the memory.

In some implementations, the system includes a database in communication with the data processing hardware. The database may store the at least one communication protocol. The data processing hardware may be configured to retrieve the at least one communication protocol from the database prior to transmitting the at least one communication protocol to the tire pressure sensor.

In some implementations, the instructions, when executed on the data processing hardware, cause the data processing hardware to transmit a unique part number to the tire pressure sensor.

In some implementations, the instructions, when executed on the data processing hardware, cause the data processing hardware to receive an order for the tire pressure sensor, and process a payment for the tire pressure sensor.

Another aspect of the invention provides a method for programming a tire pressure sensor including a power source and a memory. The method may include transmitting, by data processing hardware, at least one communication protocol to the tire pressure sensor. The method may also include determining, by the data processing hardware, a status of at least one of the power source or the memory based on the at least one communication protocol.

This aspect may include one or more of the following optional features. In some implementations, the method includes transmitting, by the data processing hardware, the status of the at least one of the power source or the memory to a display.

In some implementations, transmitting, by data processing hardware, the at least one communication protocol to the tire pressure sensor includes transmitting, by the data processing hardware, first and second communication protocols to the tire pressure sensor. The first communication protocol may correspond to a first original equipment manufacturer and the second communication protocol may correspond to a second original equipment manufacturer. The first communication protocol may be different than the second communication protocol.

In some implementations, determining, by the data processing hardware, a status of at least one of the power source or the memory based on the at least one communication protocol includes determining, by the data processing hardware, a status of the power source and the memory.

In some implementations, determining, by the data processing hardware, the status of the power source and the memory includes determining, by the data processing hardware, an available capacity of the power source and an available capacity of the memory.

In some implementations, the method further comprises retrieving, by the data processing hardware, the at least one communication protocol from a database prior to transmitting the at least one communication protocol to the tire pressure sensor.

In some implementations, the method further comprises transmitting, by the data processing hardware, a unique part number to the tire pressure sensor.

In some implementations, the method further includes receiving, at the data processing hardware, an order for the tire pressure sensor, and processing, by the data processing hardware, a payment for the tire pressure sensor.

Further areas of applicability will become apparent from the description provided herein. The description and specific examples in this summary are intended for purposes of illustration only and are not intended to limit the scope of the present invention.

### DRAWINGS

The drawings described herein are for illustrative purposes only of selected configurations and not all possible implementations, and are not intended to limit the scope of the present invention.
FIG. 1 is a functional block diagram of a system for programming a sensor in accordance with the principles of the present invention;
FIG. 2 is a functional block diagram of an example implementation of a tire pressure monitoring system in accordance with the principles of the present invention;
FIG. 3 is a flowchart of an example method for programming a sensor in accordance with the principles of the present invention; and
FIG. 4 is a schematic view of an example computing device.

Corresponding reference numerals indicate corresponding parts throughout the drawings.

### DETAILED DESCRIPTION

Example configurations will now be described more fully with reference to the accompanying drawings. Example configurations are provided so that this disclosure will be thorough, and will fully convey the scope of the invention to those of ordinary skill in the art. Specific details are set forth such as examples of specific components, devices, and methods, to provide a thorough understanding of configurations of the present invention.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional steps may be employed.

When an element or layer is referred to as being "on," "engaged to," "connected to," "attached to," or "coupled to" another element or layer, it may be directly on, engaged, connected, attached, or coupled to the other element or layer, or intervening elements or layers may be present. In contrast, when an element is referred to as being "directly on," "directly engaged to," "directly connected to," "directly attached to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

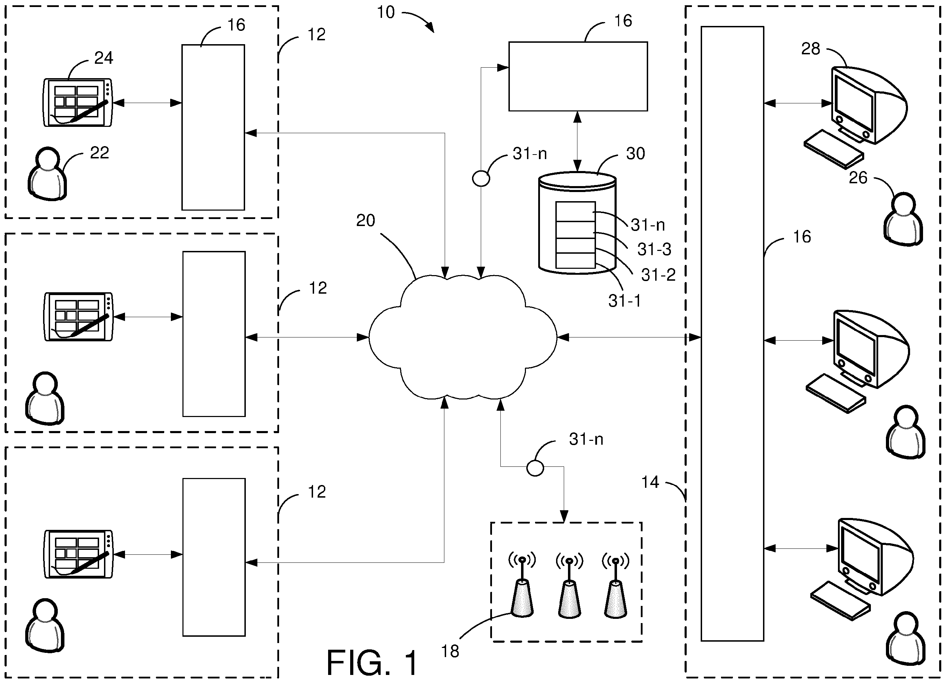

Referring to FIG. 1, a system 10 for programming a sensor is illustrated. In some implementations, the system 10 is utilized to assign a communication protocol to a sensor, such as a tire pressure monitoring (TPM) sensor, for example. It will be appreciated, however, that the system 10 may be used to program, or assign a communication protocol to, other types of sensors within the scope of the present invention.

The system 10 may include, or operate with, one or more client entities 12, a provider entity 14, a product configuration module 16, and one or more sensors 18. The client entities 12, the provider entity 14, and the sensors 18 may be in communication with one another over a computing environment (e.g., a cloud-computing environment) via a network 20. In this regard, while the system 10 is generally shown to include three client entities 12 communicating with one provider entity 14 via the network 20, it will be appreciated that the system 10 may include any number of client entities 12 communicating with any number of provider entities 14 within the scope of the present invention.

The network 20 may include various types of networks, such as a local area network (LAN), wide area network (WAN), and/or the Internet. Although the network 20 may represent a long range network (e.g., Internet or WAN), in some implementations, the network 20 includes a shorter range network, such as a local area network (LAN). In some implementations, the network 20 uses standard communications technologies and/or protocols. Thus, the network 20 can include links using technologies, such as Ethernet, Wireless Fidelity (WiFi) (e.g., 802.11), worldwide interoperability for microwave access (WiMAX), 3G, Long Term Evolution (LTE), digital subscriber line (DSL), asynchronous transfer mode (ATM), InfiniBand, PCI Express Advanced Switching, Bluetooth, Bluetooth Low Energy (BLE), etc. Similarly, the networking protocols used on the network 20 can include multiprotocol label switching (MPLS), the transmission control protocol/Internet protocol (TCP/IP), the User Datagram Protocol (UDP), the hypertext transport protocol (HTTP), the simple mail transfer protocol (SMTP), the file transfer protocol (FTP), etc. The data exchanged over the network 20 can be represented using technologies and/or formats including the hypertext markup language (HTML), the extensible markup language (XML), etc. In addition, all or some of the links can be encrypted using conventional encryption technologies, such as secure sockets layer (SSL), transport layer security (TLS), virtual private networks (VPNs), Internet Protocol security (IPsec), etc. In other examples, the network 20 uses custom and/or dedicated data communications technologies instead of, or in addition to, the ones described above.

The computing environment may provide elastic/scalable cloud computing and/or cloud storage capabilities. Cloud computing may provide Internet-based computing, whereby servers provide resources, software, and data to computers and other devices of the client and provider entities 12, 14 on demand. For example, a cloud-computing environment may be a cloud computing service that includes at least one server computing device configured to parse HTTP requests and send HTTP responses. Cloud computing may be a technology that uses the Internet and central remote servers to maintain data and applications. In this regard, references to modules (e.g., the product configuration module 16) may refer to instructions stored on one or more computing devices that cause the computing device(s) to perform one or more tasks. In some examples, a module may be referred to as an "application," an "app," or a "program." As will be explained in more detail below, the product configuration module 16 may include instructions or data stored in a non-transitory manner for use by, and communication with, a computing device of the client entities 12, the provider entities 14, or the network 20.

The client entities 12 may include brick-and-mortar facilities (e.g., retailers) or online (e.g., internet-based) retail facilities (e.g., websites). Each client entity 12 may include a user 22 and a user device 24. The user device 24 may include a WiFi enabled device (e.g., a cellular phone, a smartphone, a tablet, a wireless communication device, a personal digital assistant (PDA), a wireless modem, a handheld device, a laptop computer, a desktop computer, or other suitable computing device) having the product configuration module 16, such that the user 22 interfaces with the product configuration module 16 through the user device 24. In this regard, the product configuration module 16 may be stored on the user device 24 or at another location within the network 20 (e.g., a server within the cloud-computing environment of the network 20). During operation of the system 10, the user device 24 may communicate with the provider entities 14 over the network 20 through the product configuration module 16. In particular, the user 22 may utilize the product configuration module 16 through the user device 24 to communicate with the provider entities 14 over the network 20.

The selling entities 14 may include brick-and-mortar manufacturing or distribution facilities (e.g., a sensor manufacturing or warehousing facility) or online distribution facilities. Each selling entity 14 may include a user 26 (e.g., a sales account manager) and a user device 28. The user device 28 may include a WiFi enabled device (e.g., a cellular phone, a smartphone, a tablet, a wireless communication device, a personal digital assistant (PDA), a wireless modem, a handheld device, a laptop computer, a desktop computer, or other suitable computing device) having the product configuration module 16, such that the user 26 interfaces with the product configuration module 16 through the user device 28. In this regard, the product configuration module 16 may be stored on the user device 28 or at another location within the network 20 (e.g., a server within the cloud-computing environment of the network 20). During operation of the system 10, the user device 28 may communicate with the client entities 12 over the network 20 through the product configuration module 16. In particular, the user 26 may utilize the product configuration module 16 through the user device 28 to communicate with the client entities 12 over the network 20.

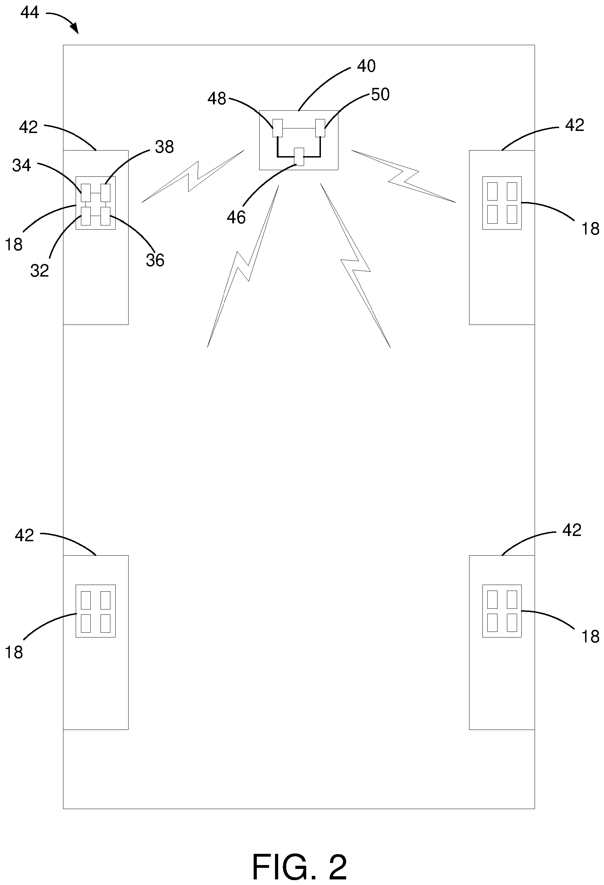

The product configuration module 16 may include, or otherwise communicate with, a protocol database 30. The protocol database 30 may include a list of communication protocols 31-1, 32-2,...31-n that administer communication between the TPM sensor 18 and a receiver (e.g., receiver 40 of the vehicle 36 in FIG. 2). In some implementations, the communication protocols 31-1, 32-2,...31-n identify or define the frequency, timing, or format of data transmissions from the TPM sensor 18 to the receiver. For example, the protocol might determine whether data is transmitted from the TPM sensors 18 sequentially or at the same time. While the protocol database 30 is generally illustrated as being stored within the network 10 (e.g., a memory of a server within the cloud-computing environment of the network 20), it will be appreciated that the protocol database 30 may be stored within a memory of the user devices 24 or 28, or within another memory of the system 10.

In some implementations, the database 30 stores a plurality of communication protocols (e.g., a first control program 31-1, a second control program 31-2, a third control program 31-3, etc.) corresponding to a plurality of original equipment manufacturers or aftermarket TPM system manufacturers. For example, the database 30 may include the first communication protocol 31-1 corresponding to a receiver (e.g., receiver 40) of a first original equipment manufacturer, a second communication protocol 31-2 corresponding to a receiver (e.g., receiver 40) of a second original equipment manufacturer, or a third communication protocol 31-3 corresponding to a receiver (e.g., receiver 40) of a manufacturer of a first aftermarket TPM system. In particular, the database 30 may store any number of communication protocols 31-1, 32-2,...31-n corresponding to any number of receiver (e.g., receiver 40) from any number of original equipment manufacturers or aftermarket TPM system manufacturers. In this regard, each communication protocol 31-1, 32-2,...31-n, corresponding to one receiver (e.g., receiver 40), may differ from any number of other communication protocols 31-1, 32-2,...31-n corresponding to other receivers (e.g., receiver 40). For example, the first communication protocol 31-1 may correspond to a receiver (e.g., receiver 40) associated with a particular vehicle manufactured by GENERAL MOTORS^{®}, while the second communication protocol 31-2 may correspond to a receiver (e.g., receiver 40) associated with a particular vehicle manufactured by FORD^{®}, while the third communication protocol 31-3 may correspond to a receiver (e.g., receiver 40) associated with an aftermarket TPM sensor manufacturer.

With reference to FIG. 2, the sensors 18 may be any mechanical or electrical-type sensor that senses the air pressure of a tire and may each include a memory 32, a transmitter 34, a processor 36, and a power source 38. The memory 32 may store information related to various conditions (e.g., air pressure) associated with a tire of a vehicle (e.g. vehicle 36), as sensed by the sensor 18, as well as one or more communication protocols 31-1, 32-2,...31-n for transmitting the sensed information. During operation, the transmitter 34 may transmit signals (e.g., radio frequency signals) having the sensed tire pressure information to an external receiver (e.g., receiver 40). The processor 36 may be communicatively coupled to the memory 32 and the transmitter 34 and configured to execute a control program stored in the memory 32. As will be explained in more detail below, execution of the control program by the processor 36 may cause the transmitter 34 to transmit the tire pressure information from the memory 32 to the external receiver (e.g., receiver 40) according to a communication protocol 31-1, 32-2,...31-n stored within the memory 32. The power source 38 (e.g., a battery) may be coupled to, or otherwise operable to provide electrical power to, the processor 36.

As illustrated in FIG. 2, and as will be described in more detail below, during operation, the system 10 may assign one or more communication protocols 31-1, 32-2,...31-n to a sensor 18 for a vehicle 36 having the receiver 40. As previously described, in some implementations, the sensor 18 is a TPM sensor 18 associated with, or configured to be disposed on, a tire 42 of the vehicle 44. For example, one or more TPM sensors 18 may be associated with, or disposed on, each tire 42 of the vehicle 44. In this regard, while the vehicle 44 is generally shown and described herein as including four tires 42, it will be appreciated that the vehicle 44 may include any number of tires 42 (e.g., more than four tires or less than four tires), each having a TPM sensor 18.

The receiver 40 may include a processor 46, a memory 48, and a power source 50. In operation, the receiver 40 may receive information (e.g., tire pressure information) from the TPM sensors 18 disposed on each of the tires 38 of the vehicle 36 and communicate the information to the processor 46 for processing. In this regard, the receiver 40 may be any communication device configured to receive a communication transmitted wirelessly (e.g., radio frequency communications) from the TPM sensors 18. In some implementations, the receiver 40 only receives tire pressure information transmitted according to one or more predetermined communication protocols 31-1, 32-2,...31-n. In this regard, the receiver 40 may recognize tire pressure information transmitted according to one predetermined communication protocol 31-1, 32-2,...31-n of a plurality of communication protocols 31-1, 32-2,...31-n and disregard tire pressure information transmitted according to others of the plurality of communication protocols 31-1, 32-2,...31-n. In particular, the predetermined communication protocol 31-1, 32-2,...31-n may be stored within the memory 48 and may correspond to (e.g., be the same as) one of the communication protocols 31-1, 32-2,...31-n stored within the database 30. Upon receiving a signal from the TPM sensors 18, the processor 46 may utilize or decode the signals transmitted by the sensors 18 based on the communication protocol 31-1, 32-2,...31-n stored within the memory 48. The power source 50 (e.g., a battery) may be coupled to, or otherwise operable to provide electrical power to, the processor 46.

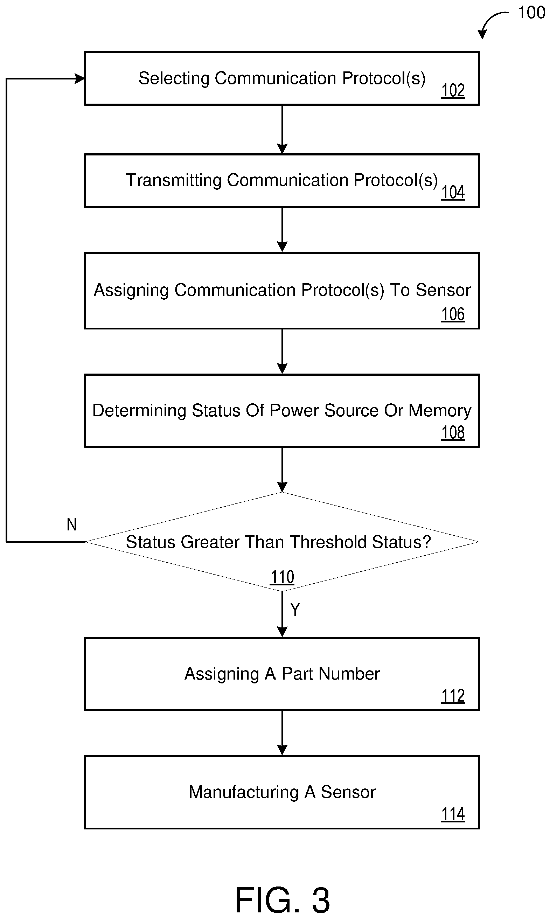

With reference to FIG. 3, a method 100 for configuring one or more sensors (e.g., sensors 18) is illustrated. As will be described in more detail below, the method may include assigning or transmitting one or more communication protocols 31-1, 32-2,...31-n to the sensor, and determining a status of a power source (e.g., power source 38) or a memory (e.g., memory 32) based on the identity of the one or more communication protocol 31-1, 32-2,...31-n.

The method 100 begins at block 102 where the method may include selecting one or more communication protocols (e.g., communication protocol 31-1, 32-2,...31-n) for use with a sensor (e.g., sensor 18). For example, at block 102, the user 22 may utilize the user device 24 to select one or more of the communication protocols 31-1, 32-2,...31-n through the product configuration module 16. In particular, the user 22 may utilize the user device 24 to access the database 30 through the product configuration module 16 and select one or more of the communication protocols 31-1, 32-2,...31-n for use with a sensor 18. In some implementations, the user 22 may select the sensor 18 prior to selecting the one or more of the communication protocols 31-1, 32-2,...31-n at block 102, such that the user 22 selects the one or more of the communication protocols 31-1, 32-2,...31-n based on the identity of the sensor 18.

At block 104, the method 100 may include transmitting the one or more communication protocols 31-1, 32-2,...31-n, selected at block 102, to the provider entity 14. For example, at block 104, the client entity 12 (e.g., the user device 24) may transmit, with the product configuration module 16, the selected one or more communication protocols 31-1, 32-2,...31-n to the client entity 14. In some implementations, the client entity 12 may transmit the selected one or more communication protocols 31-1, 32-2,...31-n to a server or other cloud-computing device on the network 20 through the product configuration module 16.

At block 106, the method 100 may include assigning one or more of the communication protocols 31-1, 32-2,...31-n to a sensor 18. For example, at block 106, the method may include assigning the one or more of the communication protocols 31-1, 32-2,...31-n selected at block 102 to the sensor 18 selected at block 102. In particular, at block 106, the user 26 may utilize the user device 28 to assign the one or more communication protocols 31-1, 32-2,...31-n, selected at block 102, to the sensor 18 through the product configuration module 16. In this regard, the user 28 may utilize the user device 24 to transmit, with the product configuration module 16, the one or more communication protocols 31-1, 32-2,...31-n selected at block 102 from the database 30 to the memory 32 of the sensor 18.

At block 108, the method 100 may include determining a status of a power source (e.g., power source 38) and a memory (e.g., memory 32). For example, at block 108, the method 100 may include determining a status of the power source 38 and a status of the memory 32 based on the one or more communication protocols 31-1, 32-2,...31-n assigned at block 106. In particular, at block 108, the method may include determining, with the product configuration module 16, an estimated remaining life (e.g., number of months, years, or other measure of time) of the power source 38 and an estimated amount of available storage capacity of the memory 32 based on the one or more communication protocols 31-1, 32-2,...31-n assigned at block 106. In some implementations, in order to determine a status of the power source 38 and a status of the memory 32 at block 108, the product configuration module 16 may determine (i) the amount of power utilized by the one or more communication protocols 31-1, 32-2,...31-n assigned at block 106 during operation of the vehicle, and (ii) the amount of storage space of the memory 32 utilized by the one or more communication protocols 31-1, 32-2,...31-n assigned at block 106 during operation of the vehicle. In order to determine a status of the power source 38, the product configuration module 16 may then determine the difference between the total power of the power source 38 and the amount of power utilized by the one or more communication protocols 31-1, 32-2,...31-n assigned at block 106 during operation of the vehicle. In order to determine a status of the memory 32, the product configuration module 16 may then determine the difference between the total amount of storage space of the memory 32 and the amount of storage space of the memory 32 utilized by the one or more communication protocols 31-1, 32-2,...31-n assigned at block 106 during operation of the vehicle.

At block 110, the method 100 may include determining whether the status of the power source 38 and the memory 32, determined at block 108, is greater than a threshold status of the power source 38 and the memory 32. For example, at block 110, the method may include determining, with the product configuration module 16, whether the estimated remaining life of the power source 38 is greater than a predetermined threshold life of the power source, and whether the estimated amount of available storage capacity of the memory 32 is greater than a predetermined threshold amount of storage space of the memory 38. At block 110, the method 100 may also include transmitting the status of the power source 38 or the memory 32 to an audio (e.g., a speaker) or visual indicator (e.g., a display, light source, etc.). For example, at block 110, the method 100 may include transmitting the status of the power source 38 or the memory 32 to a display of the user device 24.

If block 110 is false, the method 100 may return to block 102 where the user 22 may utilize the user device 24 to select one or more of the communication protocols 31-1, 32-2,...31-n through the product configuration module 16. In this regard, the one or more communication protocols 31-1, 32-2,...31-n selected upon returning to block 102 after block 110 may be different than the one or more communication protocols 31-1, 32-2,...31-n selected during a previous iteration of block 102.

If block 110 is true, the method 100 may proceed to block 112 where the method 100 may include assigning a part number to a sensor (e.g., sensor 18). For example, at block 112, the user 22 may utilize the user device 24 to assign the part number to the sensor 18 through the product configuration module 16. At block 112, the method may also include transmitting or receiving an order for the tire pressure sensor 18, or processing a payment for the tire pressure sensor 18. For example, at block 112, the method may include transmitting an order for the tire pressure sensor 18 from the user device 24 to the user device 28 via the network 20. Similarly, the method may include processing a payment for the tire pressure sensor 18 transmitted from the user device 24 to the user device 28 via the network 20.

At block 114, the method 100 may include manufacturing a sensor (e.g., sensor 18). For example, at block 114, the method may include manufacturing the sensor 18 having the part number assigned at block 112 and the communication protocols 31-1, 32-2,...31-n selected at block 112. In particular, the user 26 may utilize the product configuration module 16 through the user device 28 to instruct the manufacturing of the sensor 18 having the previously-assigned or selected part number and communication protocols 31-1, 32-2,...31-n.

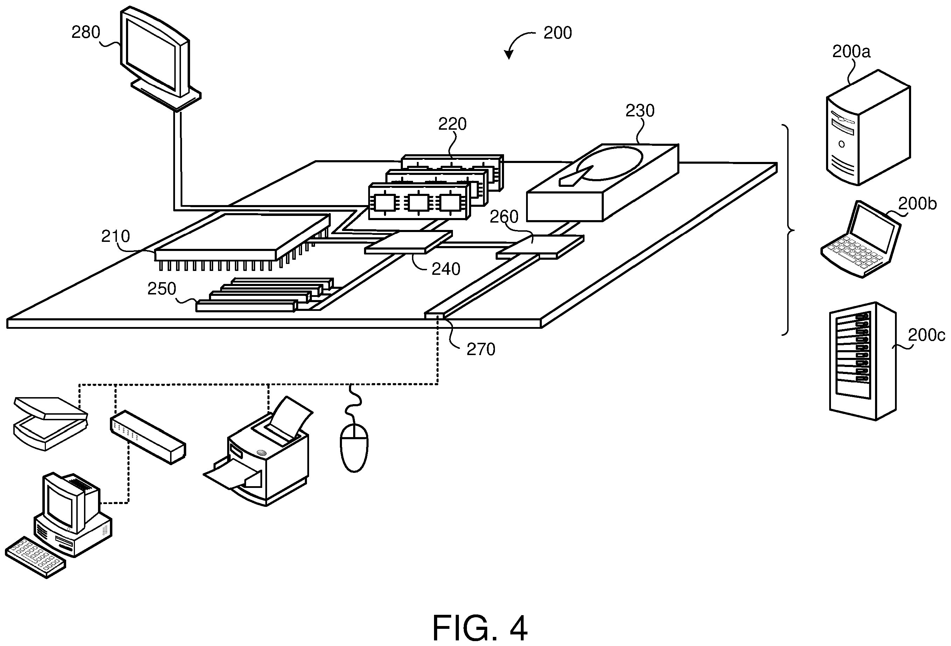

FIG. 4 is schematic view of an example computing device 200 that may be used to implement the systems and methods described in this document. The computing device 200 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 200 includes a processor 210, memory 220, a storage memory 230, a high-speed interface/controller 240 connecting to the memory 220 and high-speed expansion ports 250, and a low speed interface/controller 260 connecting to a low speed bus 270 and a storage memory 230. Each of the components 210, 220, 230, 240, 250, and 260, are interconnected using various busses, and may be mounted on a common motherboard or in other manners as appropriate. The processor 210 can process instructions for execution within the computing device 200, including instructions stored in the memory 220 or on the storage memory 230 to display graphical information for a graphical user interface (GUI) on an external input/output device, such as display 280 coupled to high speed interface 240. In other implementations, multiple processors and/or multiple buses may be used, as appropriate, along with multiple memories and types of memory. Also, multiple computing devices 200 may be connected, with each device providing portions of the necessary operations (e.g., as a server bank, a group of blade servers, or a multi-processor system).

The memory 220 stores information non-transitorily within the computing device 200. The memory 220 may be a computer-readable medium, a volatile memory unit(s), or non-volatile memory unit(s). The non-transitory memory 220 may be physical devices used to store programs (e.g., sequences of instructions) or data (e.g., program state information) on a temporary or permanent basis for use by the computing device 200. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage memory 230 is capable of providing mass storage for the computing device 200. In some implementations, the storage memory 230 is a computer-readable medium. In various different implementations, the storage memory 230 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 220, the storage memory 230, or memory on processor 210.

The high speed controller 240 manages bandwidth-intensive operations for the computing device 200, while the low speed controller 260 manages lower bandwidth-intensive operations. Such allocation of duties is exemplary only. In some implementations, the high-speed controller 240 is coupled to the memory 220, the display 280 (e.g., through a graphics processor or accelerator), and to the high-speed expansion ports 250, which may accept various expansion cards (not shown). In some implementations, the low-speed controller 260 is coupled to the storage memory 230 and a low-speed expansion port 290. The low-speed expansion port 290, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 200 may be implemented in a number of different forms, as shown in the figure. For example, it may be implemented as a standard server 200a or multiple times in a group of such servers 200a, as a laptop computer 200b, or as part of a rack server system 200c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

Implementations of the subject matter and the functional operations described in this specification can be implemented in digital electronic circuitry, or in computer software, firmware, or hardware, including the structures disclosed in this specification and their structural equivalents, or in combinations of one or more of them. Moreover, subject matter described in this specification can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter affecting a machine-readable propagated signal, or a combination of one or more of them. The terms "data processing apparatus", "computing device" and "computing processor" encompass all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal that is generated to encode information for transmission to suitable receiver apparatus.

A computer program (also known as an application, program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the invention can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

One or more aspects of the invention can be implemented in a computing system that includes a backend component, e.g., as a data server, or that includes a middleware component, e.g., an application server, or that includes a frontend component, e.g., a client computer having a graphical user interface or a Web browser through which a user can interact with an implementation of the subject matter described in this specification, or any combination of one or more such backend, middleware, or frontend components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some implementations, a server transmits data (e.g., an HTML page) to a client device (e.g., for purposes of displaying data to and receiving user input from a user interacting with the client device). Data generated at the client device (e.g., a result of the user interaction) can be received from the client device at the server.

## Claims

1. A method for programming a tire pressure sensor (18) including a power source (38) and a memory (32), the method comprising:
transmitting, by data processing hardware, at least one communication protocol (31-n) to the tire pressure sensor (18); and **characterized by**:
determining, by the data processing hardware, a status of at least one of the power source (38) or the memory (32) based on the at least one communication protocol (31-n).

2. The method of Claim 1, further comprising transmitting, by the data processing hardware, the status of the at least one of the power source (38) or the memory (32) to a display.

3. The method of Claim 1 or 2, wherein transmitting, by data processing hardware, the at least one communication protocol (31-n) to the tire pressure sensor (18) includes transmitting, by the data processing hardware, first and second communication protocols (31-1, 31-2) to the tire pressure sensor (18).

4. The method of Claim 3, wherein the first communication protocol (31-1) corresponds to a first original equipment manufacturer and the second communication protocol (31-2) corresponds to a second original equipment manufacturer.

5. The method of Claim 3 or 4, wherein the first communication protocol (31-1) is different than the second communication protocol (31-2).

6. The method of any of the preceding Claims, wherein determining, by the data processing hardware, a status of at least one of the power source (38) or the memory (32) based on the at least one communication protocol includes determining, by the data processing hardware, a status of the power source (38) and the memory (32).

7. The method of any of the preceding Claims, wherein determining, by the data processing hardware, the status of the power source (38) and the memory (32) includes determining, by the data processing hardware, an available capacity of the power source (38) and an available capacity of the memory (32).

8. The method of any of the preceding Claims, further comprising retrieving, by the data processing hardware, the at least one communication protocol (31-n) from a database (30) prior to transmitting the at least one communication protocol (31-n) to the tire pressure sensor (18).

9. The method of any of the preceding Claims, further comprising transmitting, by the data processing hardware, a unique part number to the tire pressure sensor (18).

10. The method of any of the preceding Claims, further comprising:
receiving, at the data processing hardware, an order for the tire pressure sensor (18); and
processing, by the data processing hardware, a payment for the tire pressure sensor (18).

11. A system for programming a tire pressure sensor (18) including a power source (38) and a memory (32), the system comprising:
data processing hardware; and
memory hardware in communication with the data processing hardware, the memory hardware storing instructions that when executed on the data processing hardware cause the data processing hardware to perform the method of any of the preceding Claims.

12. The system of Claim 11, further comprising a display in communication with the data processing hardware.

13. The system of Claim 11 or 12, further comprising a database (30) in communication with the data processing hardware and storing the at least one communication protocol (31-n).

## Patentansprüche

1. Verfahren zum Programmieren eines Reifendrucksensors (18), der eine Stromquelle (38) und einen Speicher (32) aufweist, wobei das Verfahren Folgendes umfasst:
Übertragen, durch Datenverarbeitungshardware, mindestens eines Kommunikationsprotokolls (31-n) an den Reifendrucksensor (18); und **gekennzeichnet durch**:
Bestimmen, durch die Datenverarbeitungshardware, eines Status der Stromquelle (38) und/oder des Speichers (32) basierend auf dem mindestens einen Kommunikationsprotokoll (31-n).

2. Verfahren nach Anspruch 1, ferner umfassend Übertragen, durch die Datenverarbeitungshardware, des Status der Stromquelle (38) und/oder des Speichers (32) an eine Anzeige.

3. Verfahren nach Anspruch 1 oder 2, wobei das Übertragen, durch die Datenverarbeitungshardware, des mindestens einen Kommunikationsprotokolls (31-n) an den Reifendrucksensor (18) Übertragen, durch die Datenverarbeitungshardware, eines ersten und eines zweiten Kommunikationsprotokolls (31-1, 31-2) an den Reifendrucksensor (18) beinhaltet.

4. Verfahren nach Anspruch 3, wobei das erste Kommunikationsprotokoll (31-1) einem ersten Erstausrüster entspricht und das zweite Kommunikationsprotokoll (31-2) einem zweiten Erstausrüster entspricht.

5. Verfahren nach Anspruch 3 oder 4, wobei sich das erste Kommunikationsprotokoll (31-1) von dem zweiten Kommunikationsprotokoll (31-2) unterscheidet.

6. Verfahren nach einem der vorhergehenden Ansprüche, wobei das Bestimmen, durch die Datenverarbeitungshardware, eines Status der Stromquelle (38) und/oder des Speichers (32) basierend auf dem mindestens einen Kommunikationsprotokoll Bestimmen, durch die Datenverarbeitungshardware, eines Status der Stromquelle (38) und des Speichers (32) beinhaltet.

7. Verfahren nach einem der vorhergehenden Ansprüche, wobei das Bestimmen, durch die Datenverarbeitungshardware, des Status der Stromquelle (38) und/oder des Speichers (32) Bestimmen, durch die Datenverarbeitungshardware, einer verfügbaren Kapazität der Stromquelle (38) und einer verfügbaren Kapazität des Speichers (32) beinhaltet.

8. Verfahren nach einem der vorhergehenden Ansprüche, ferner umfassend Abrufen, durch die Datenverarbeitungshardware, des mindestens einen Kommunikationsprotokolls (31-n) aus einer Datenbank (30) vor dem Übertragen des mindestens einen Kommunikationsprotokolls (31-n) an den Reifendrucksensor (18) .

9. Verfahren nach einem der vorhergehenden Ansprüche, ferner umfassend Übertragen, durch die Datenverarbeitungshardware, einer eindeutigen Teilenummer an den Reifendrucksensor (18).

10. Verfahren nach einem der vorhergehenden Ansprüche, das ferner Folgendes umfasst:
Empfangen, an der Datenverarbeitungshardware, einer Bestellung für den Reifendrucksensor (18); und
Abwickeln, durch die Datenverarbeitungshardware, einer Zahlung für den Reifendrucksensor (18).

11. System zum Programmieren eines Reifendrucksensors (18), der eine Stromquelle (38) und einen Speicher (32) aufweist, wobei das System Folgendes umfasst:
Datenverarbeitungshardware; und
Speicherhardware in Kommunikation mit der Datenverarbeitungshardware, wobei die Speicherhardware Anweisungen speichert, die bei Ausführung auf der Datenverarbeitungshardware bewirken, dass die Datenverarbeitungshardware das Verfahren nach einem der vorhergehenden Ansprüche durchführt.

12. System nach Anspruch 11, ferner umfassend eine Anzeige in Kommunikation mit der Datenverarbeitungshardware.

13. System nach Anspruch 11 oder 12, ferner umfassend eine Datenbank (30) in Kommunikation mit der Datenverarbeitungshardware und zum Speichern des mindestens einen Kommunikationsprotokolls (31-n).

## Revendications

1. Procédé pour programmer un capteur de pression de pneumatique (18) incluant une source de puissance (38) et une mémoire (32), le procédé comprenant :
l'émission, par un composant matériel de traitement de données, d'au moins un protocole de communication (31-n) sur le capteur de pression de pneumatique (18) ; et **caractérisé par** :
la détermination, par le composant matériel de traitement de données, d'un état d'au moins un élément constitutif parmi la source de puissance (38) et la mémoire (32) sur la base de l'au moins un protocole de communication (31-n).

2. Procédé selon la revendication 1, comprenant en outre l'émission, par le composant matériel de traitement de données, de l'état de l'au moins un élément constitutif parmi la source de puissance (38) et la mémoire (32) sur un affichage.

3. Procédé selon la revendication 1 ou 2, dans lequel l'émission, par le composant matériel de traitement de données, de l'au moins un protocole de communication (31-n) sur le capteur de pression de pneumatique (18) inclut l'émission, par le composant matériel de traitement de données, de premier et second protocoles de communication (31-1, 31-2) sur le capteur de pression de pneumatique (18) .

4. Procédé selon la revendication 3, dans lequel le premier protocole de communication (31-1) correspond à un premier fabricant d'équipements d'origine et le second protocole de communication (31-2) correspond à un second fabricant d'équipements d'origine.

5. Procédé selon la revendication 3 ou 4, dans lequel le premier protocole de communication (31-1) est différent du second protocole de communication (31-2).

6. Procédé selon l'une quelconque des revendications précédentes, dans lequel la détermination, par le composant matériel de traitement de données, d'un état d'au moins un élément constitutif parmi la source de puissance (38) et la mémoire (32) sur la base de l'au moins un protocole de communication inclut la détermination, par le composant matériel de traitement de données, d'un état de la source de puissance (38) et de la mémoire (32).

7. Procédé selon l'une quelconque des revendications précédentes, dans lequel la détermination, par le composant matériel de traitement de données, de l'état de la source de puissance (38) et de la mémoire (32) inclut la détermination, par le composant matériel de traitement de données, d'une capacité disponible de la source de puissance (38) et d'une capacité disponible de la mémoire (32).

8. Procédé selon l'une quelconque des revendications précédentes, comprenant en outre l'extraction, par le composant matériel de traitement de données, de l'au moins un protocole de communication (31-n) à partir d'une base de données (30) avant l'émission de l'au moins un protocole de communication (31-n) sur le capteur de pression de pneumatique (18).

9. Procédé selon l'une quelconque des revendications précédentes, comprenant en outre l'émission, par le composant matériel de traitement de données, d'un numéro de partie unique sur le capteur de pression de pneumatique (18).

10. Procédé selon l'une quelconque des revendications précédentes, comprenant en outre :
la réception, au niveau du composant matériel de traitement de données, d'un ordre de commande pour le capteur de pression de pneumatique (18) ; et
le traitement, par le composant matériel de traitement de données, d'un paiement pour le capteur de pression de pneumatique (18).

11. Système pour programmer un capteur de pression de pneumatique (18) incluant une source de puissance (38) et une mémoire (32), le système comprenant :
un composant matériel de traitement de données ; et
un composant matériel de mémoire en communication avec le composant matériel de traitement de données, le composant matériel de mémoire stockant des instructions qui, lorsqu'elles sont exécutées sur le composant matériel de traitement de données, ont pour effet que le composant matériel de traitement de données réalise le procédé selon l'une quelconque des revendications précédentes.

12. Système selon la revendication 11, comprenant en outre un affichage en communication avec le composant matériel de traitement de données

13. Système selon la revendication 11 ou 12, comprenant en outre une base de données (30) en communication avec le composant matériel de traitement de données et stockant l'au moins un protocole de communication (31-n) .
